# EUROPEAN PATENT APPLICATION

(11) **EP 2 587 255 A1**
(43) Date of publication of application: **01.05.2013**
(21) Application number: 10853645.9
(22) Date of filing: 23.06.2010
(51) Int. Cl.: G01N 27/26, G01N 27/416

(54) **FAULT DIAGNOSIS SYSTEM FOR GAS SENSOR**

(71) Applicant: TOYOTA JIDOSHA KABUSHIKI KAISHA, Toyota-shi, Aichi-ken, 471-8571 (JP)
(72) Inventor: SASAKI, Takanori, Toyota-shi, Aichi 471-8571 (JP)
(74) Representative: TBK
(86) International application number: PCT/JP2010/060655
(87) International publication number: WO 2011/161785

(57) **Abstract**

A gas sensor is diagnosed for a possible abnormality based on an output characteristic during warming of the gas sensor.

An abnormality diagnostic apparatus 10 for a gas sensor includes a NOx sensor 1 that includes a main pump cell 2, an auxiliary pump cell 3, and a detection cell 5. The abnormality diagnostic apparatus 10 diagnoses at least one of the detection cell 5, the main pump cell 2, and the auxiliary pump cell 3 for an abnormality, based on at least one of a rising characteristic of a NOx output of the detection cell 5 immediately after a start of detection of the NOx output, its peak value, and its subsequent falling characteristic. Preferably, an abnormality of the detection cell 5 is determined, if a speed with which the NOx output rises is small. Additionally, an abnormality of at least one of the main pump cell 2 and the auxiliary pump cell 3 is determined, if a speed with which the NOx output falls is small. Additionally, an abnormality of the detection cell 5 is determined, if the peak value of the NOx output is small.

## Description

### Technical Field

The present invention relates to abnormality diagnostic apparatuses for gas sensors. In particular, the invention relates to an abnormality diagnostic apparatus for determining an abnormality in a gas sensor that detects concentration of a specific gas component contained in an exhaust gas discharged from an engine.

### Background Art

A NOx sensor is known that detects concentration of NOx contained in an exhaust gas of an internal combustion engine. One known NOx sensor includes a main pump cell, an auxiliary pump cell, and a detection cell. The main pump cell pumps oxygen out of a gas to be measured. The auxiliary pump cell further pumps oxygen out of the gas to be measured. The detection cell detects concentration of NOx contained in the gas to be measured of which the oxygen has been pumped out. A solid electrolyte is used for each of these cells. In order for each cell to exhibit its proper characteristic, temperature of the solid electrolyte needs to be maintained at a predetermined level or higher.

To further improve emissions from internal combustion engines, a need exists for using information on the NOx concentration detected by the NOx sensor for engine control at as early timing as possible after the engine has been started. To achieve that end, it is important to determine activation of the NOx sensor with accuracy.

However, activation speed (speed with which the activation is completed) varies from one cell to another. This is because, for example, each cell is formed of a unique material as determined according to a function that the specific cell performs and a distance between the cell and a heater varies from one cell to another.

JP-A-2004-132840 discloses a gas concentration detecting apparatus that makes an individual determination on activation of each of a main pump cell ("a first cell" in this publication) and a detection cell ("a second cell" in the publication) and that makes a determination on activation of the detection after activation of the main pump cell has been completed. This apparatus allows an oxygen concentration signal detected by the main pump cell to be used at early timing without having to wait for the activation of the detection cell to be completed.

### Prior Art Documents

### Patent Documents

Patent Document 1: JP-A-2004-132840
Patent Document 2: JP-A-2003-90819
Patent Document 3: JP-A-2002-106332

### Summary of the Invention

### Problem to be Solved by the Invention

Gas sensors are typically placed under an environment in which high temperature exhaust gases prevail. The detection cell, the main pump cell, and the auxiliary pump cell that constitute the gas sensor may therefore develop, for example, a crack or deterioration with time arising from, for example, the sensor's being wet with water. If such a deterioration abnormality occurs, a cell output may not be accurately detected. As disclosed in the related art documents, the cell output is used for determining activation and various other types of control. A need thus exists for onboard diagnosis (OBD) of abnormalities, such as a deteriorated cell, at as early stages as possible.

The present invention has been made to solve the foregoing problem and it is an object of the present invention to provide an abnormality diagnostic apparatus for a gas sensor capable of diagnosing an abnormality in the gas sensor based on an output characteristic of the gas sensor during the warming of the gas sensor.

### Means for Solving the Problem

In accomplishing the above object, according to a first aspect of the present invention, there is provided an abnormality diagnostic apparatus for a gas sensor, the gas sensor including: a main pump cell for pumping oxygen out of a gas to be measured; an auxiliary pump cell for pumping oxygen further out of the gas to be measured; and a detection cell for detecting concentration of a specific gas component contained in the gas to be measured out of which oxygen has been pumped by the main pump cell and the auxiliary pump cell, the abnormality diagnostic apparatus comprising:
abnormality diagnosis means for diagnosing an abnormality in at least one of the detection cell, the main pump cell, and the auxiliary pump cell based on at least one of a rising characteristic of a cell output of the detection cell immediately following a start of detection of the cell output, a peak value thereof, and a subsequent falling characteristic thereof, during warming of the gas sensor.

According to a second aspect of the present invention, there is provided the abnormality diagnostic apparatus for the gas sensor as described in the first aspect, wherein:
if a speed with which the cell output rises is smaller than a predetermined threshold value, the abnormality diagnosis means determines that an abnormality has occurred in the detection cell.

According to a third aspect of the present invention, there is provided the abnormality diagnostic apparatus for the gas sensor as described in the first or second aspect, wherein:
if a speed with which the cell output falls after rising is smaller than a predetermined threshold value, the abnormality diagnosis means determines that an abnormality has occurred in at least one of the main pump cell and the auxiliary pump cell.

According to a fourth aspect of the present invention, there is provided the abnormality diagnostic apparatus for the gas sensor as described in any one of the first to third aspects, wherein:
if a peak value after rising of the cell output is smaller than a predetermined threshold value, the abnormality diagnosis means determines that an abnormality has occurred in the detection cell.

According to a fifth aspect of the present invention, there is provided the abnormality diagnostic apparatus for the gas sensor as described in any one of the first to fourth aspects, wherein:
the abnormality diagnosis means determines whether there is an abnormality of being out of a range of the gas sensor.

According to a sixth aspect of the present invention, there is provided the abnormality diagnostic apparatus for the gas sensor as described in any one of the first to fifth aspects, wherein:
the abnormality diagnosis means determines whether there is an abnormality of reduced response of the gas sensor.

According to a seventh aspect of the present invention, there is provided the abnormality diagnostic apparatus for the gas sensor as described in any one of the first to sixth aspects, wherein:
the abnormality diagnosis means determines whether there is an abnormality arising from an open circuit of the gas sensor.

According to a eighth aspect of the present invention, there is provided the abnormality diagnostic apparatus for the gas sensor as described in any one of the first to seventh aspects, wherein:
the abnormality diagnosis means determines whether there is an abnormality arising from a short circuit of the gas sensor.

### Effects of the Invention

In the first aspect of the present invention, at least one of the main pump cell, the auxiliary pump cell, and the detection cell can be diagnosed for an abnormality based on the cell output characteristics during the warming of the gas sensor. The present invention thus allows the OBD of the gas sensor to be performed during the warming of the gas sensor.

In the second aspect of the present invention, an abnormality of the detection cell is determined, if the speed with which the cell output rises immediately after the start of the detection of the cell output during the warming of the gas sensor is smaller than a predetermined threshold value. The rise of the cell output represents a change in the output occurring when oxygen in the gas sensor reacts on the electrode of the detection cell. The change in the output is sluggish when the detection cell develops an abnormality such as deterioration. The present invention thus allows the detection cell to be diagnosed for an abnormality effectively based on the speed with which the cell output rises.

In the third aspect of the present invention, if the speed with which the cell output falls after rising is smaller than a predetermined threshold value, an abnormality of at least one of the main pump cell and the auxiliary pump cell is determined. The fall of the cell output represents a change in the output occurring when the main pump cell and the auxiliary pump cell remove oxygen in the gas sensor. The change in the output is sluggish when these pump cells develop an abnormality such as deterioration. The present invention thus allows the main pump cell and the auxiliary pump cell to be diagnosed for an abnormality effectively based on the speed with which the cell output falls.

In the fourth aspect of the present invention, an abnormality of the detection cell is determined, if the peak value after the rise of the cell output is smaller than a predetermined threshold value. The peak value tends to be small, if the detection cell develops an abnormality such as deterioration. The present invention thus allows the detection cell to be diagnosed for an abnormality effectively based on the peak value of the cell output.

In the fifth aspect of the present invention, whether there is an abnormality of being out of a range of the gas sensor can be diagnosed at early timing during the warming of the gas sensor.

In the sixth aspect of the present invention, whether there is an abnormality of reduced response of the gas sensor can be diagnosed at early timing during the warming of the gas sensor.

In the seventh aspect of the present invention, whether there is an abnormality of an open circuit of the gas sensor can be diagnosed at early timing during the warming of the gas sensor.

In the eighth aspect of the present invention, whether there is an abnormality of a short circuit of the gas sensor can be diagnosed at early timing during the warming of the gas sensor.

### Brief Description of Drawings

Fig. 1 is an illustration showing arrangements of a gas concentration detecting apparatus 10 according to an embodiment of the present invention.
Fig. 2 is a graph showing behavior of the NOx output during warming of the NOx sensor 1.
Fig. 3 is a graph showing an output characteristic when the detection of the NOx output is started during the warming of the NOx sensor 1.
Fig. 4 is a flowchart showing a routine performed by the ECU 9 in this embodiment.

### Modes for Carrying Out the Invention

An embodiment of the present invention will be described below with reference to the accompanying drawings. In the drawings, like or corresponding parts are identified by the same reference numerals and descriptions for those parts will not be duplicated. The embodiment to be described hereunder is not intended to limit the present invention.

### Embodiment

### [Arrangements of embodiment]

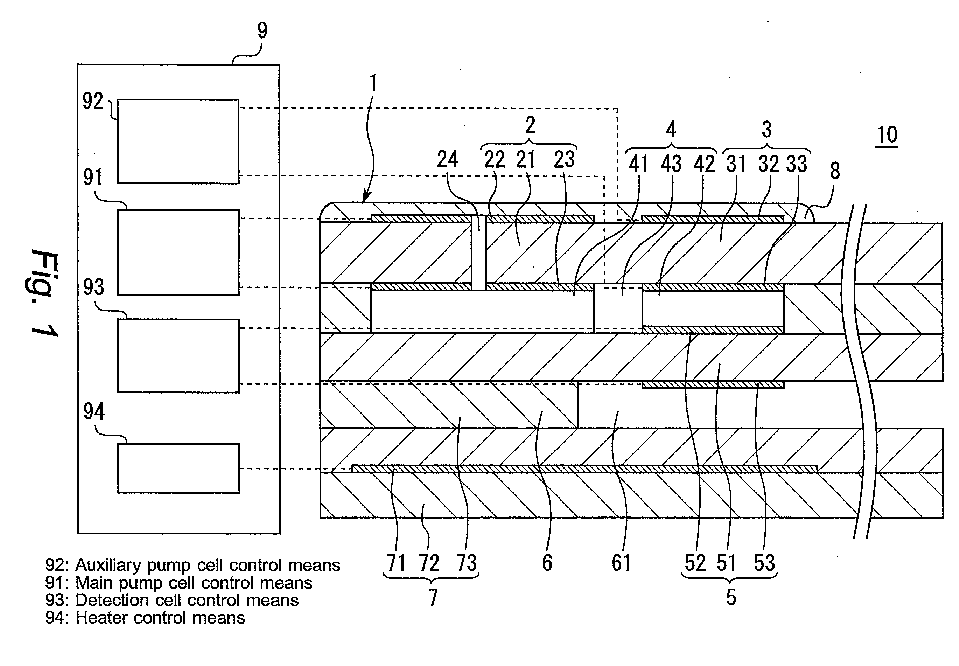

Fig. 1 illustrates arrangements of a gas concentration detecting apparatus 10 according to an embodiment of the present invention. The gas concentration detecting apparatus 10 according to the embodiment detects a concentration of NOx (nitrogen oxide) contained in an exhaust gas of an internal combustion engine (hereinafter referred to also as an "engine"). The gas concentration detecting apparatus 10 includes a NOx sensor 1.

The NOx sensor 1 includes a main pump cell 2 and an auxiliary pump cell 3, under which a spacer 4, a detection cell (sensor cell) 5, a spacer 6, and a heater 7 are stacked downwardly in sequence.

The spacer 4 includes a first chamber 41 and a second chamber 42. The spacer 4 may be formed, for example, of alumina. The first chamber 41 and the second chamber 42 communicate with each other through a communication hole 43. The first chamber 41, the second chamber 42, and the communication hole 43 are formed by having blanked holes in the spacer 4.

The main pump cell 2 functions to pump and remove excess oxygen out of a gas to be measured that flows into the first chamber 41. The main pump cell 2 includes a solid electrolyte 21 and a pair of pump electrodes 22, 23. The solid electrolyte 21 as an element has oxygen ion conductivity. The solid electrolyte 21 is formed of, for example, ZrO₂, HfO₂, ThO₂, or BiO₃ that is formed, for example, in a sheet form. The pump electrodes 22, 23 that sandwich the solid electrolyte 21 from above and below are formed through, for example, screen printing.

A first pump electrode 22 formed on a surface of the solid electrolyte 21 faces a space in which an exhaust gas as the gas to be measured exists, specifically, an exhaust passage of the engine. A porous cermet electrode containing, for example, a noble metal such as Pt may be used for the first pump electrode 22.

A second pump electrode 23 disposed opposite to the first pump electrode 22 across the solid electrolyte 21 faces the first chamber 41. An electrode inactive to NOx, for example, a porous cermet electrode containing a Pt-Au alloy and ceramics such as zirconia or alumina, may be used for the second pump electrode 23.

The main pump cell 2 has a pinhole 24 formed as an introduction hole that penetrates the solid electrolyte 21 and the pump electrodes 22, 23. The exhaust gas as the gas to be measured permeates through a porous protective layer 8 to be described later and, by way of the pinhole 24, flows into the first chamber 41. The pinhole 24 is designed to have such a diameter that the exhaust gas introduced into the first chamber 41 diffuses at a predetermined speed.

The auxiliary pump cell 3 detects an oxygen concentration of the gas to be measured that has flowed into the second chamber 42 from the first chamber 41, and pumps and removes excess oxygen further out of the gas in question. The auxiliary pump cell 3 includes a solid electrolyte 31 and a pair of pump electrodes 32, 33. The solid electrolyte 31 as an element has oxygen ion conductivity. The solid electrolyte 31 is formed of, for example, ZrO₂, HfO₂, ThO₂, or BiO₃ that is formed, for example, in a sheet form. The pump electrodes 32, 33 that sandwich the solid electrolyte 31 from above and below are formed through, for example, screen printing.

A first pump electrode 32 formed on a surface of the solid electrolyte 31 faces the exhaust passage of the internal combustion engine. A porous cermet electrode containing, for example, a noble metal such as Pt may be used for the first pump electrode 32.

A second pump electrode 33 disposed opposite to the first pump electrode 32 across the solid electrolyte 31 faces the second chamber 42. An electrode inactive to NOx, for example, a porous cermet electrode containing, for example, a Pt-Au alloy and ceramics such as zirconia or alumina, may be used for the second pump electrode 33.

The first pump electrodes 22, 32 of the main pump cell 2 and the auxiliary pump cell 3, respectively, are covered with the porous protective layer 8. The porous protective layer 8 is formed, for example, of porous alumina. The porous protective layer 8 prevents poisoning of the first pump electrodes 22, 32 and prevents the pinhole 24 from being blocked by, for example, soot contained in the exhaust gas.

The detection cell 5 detects a NOx concentration using an amount of oxygen produced through reductive decomposition of NO. The detection cell 5 includes a solid electrolyte 51 and a pair of detection electrodes 52, 53 that sandwich the solid electrolyte 51 from above and below. The detection electrodes 52, 53 may be formed through, for example, screen printing.

A first detection electrode 52 formed on a surface of the solid electrolyte 51 faces the second chamber 42. For example, a porous cermet electrode containing, for example, a Pt-Rh alloy and ceramics such as zirconia or alumina, may be used for the first pump electrode 52.

A second detection electrode 53 disposed opposite to the first detection electrode 52 across the solid electrolyte 51 faces an atmospheric duct 61 formed in the spacer 6. Atmospheric air is introduced to the atmospheric duct 61. A porous cermet electrode containing, for example, a noble metal such as Pt may be used for the second detection electrode 53. The atmospheric duct 61 can be formed by notching the spacer 6.

The heater 7 includes sheet-shaped insulation layers 72, 73 and a heater electrode 71 disposed between the insulation layers 72, 73. The insulation layers 72, 73 are formed, for example, of ceramics such as alumina. The heater electrode 71 is formed, for example, of a cermet that is made of Pt and ceramics such as alumina.

The gas concentration detecting apparatus 10 according to this embodiment includes an electronic control unit (ECU) 9 that serves as a control unit. The ECU 9 includes main pump cell control means 91, auxiliary pump cell control means 92, detection cell control means 93, and heater control means 94. The ECU 9 may be configured separately from an engine control ECU or as a part of the engine control ECU.

The main pump cell control means 91 is connected to the first pump electrode 22 and the second pump electrode 23 of the main pump cell 2. The main pump cell control means 91 applies a voltage to the first pump electrode 22 and the second pump electrode 23 and is capable of detecting the value of a current flowing through the main pump cell 2.

The auxiliary pump cell control means 92 is connected to the first pump electrode 32 and the second pump electrode 33 of the auxiliary pump cell 3. The auxiliary pump cell control means 92 applies a voltage to the first pump electrode 32 and the second pump electrode 33 of the auxiliary pump cell 3 and is capable of detecting the value of a current flowing through the auxiliary pump cell 3.

The detection cell control means 93 is connected to the first detection electrode 52 and the second detection electrode 53 of the detection cell 5. The detection cell control means 93 applies a voltage to the first detection electrode 52 and the second detection electrode 53 and is capable of detecting the value of a current flowing through the detection cell 5.

The heater control means 94 is connected to the heater electrode 71. The heater control means 94 supplies electrical power to the heater electrode 71.

In the NOx sensor 1 as described above, in order for each of the main pump cell 2, the auxiliary pump cell 3, and the detection cell 5 to exhibit its proper characteristic, the temperature of each of the solid electrolytes 21, 31, 51 needs to be an activation temperature or more. When the engine is stationary or when a fuel cut is performed for a long time, however, the temperature of each cell is reduced. When the engine is started or during a reset from the fuel cut for a long time, therefore, the heater 7 is energized to perform thereby control for warming the NOx sensor 1 to immediately raise the temperature of each cell to the active temperature or more.

### [Operation of embodiment]

### (Basic operation of gas concentration detecting apparatus 10)

Operation of the gas concentration detecting apparatus 10 after completion of warming of the NOx sensor 1 will be described below. The exhaust gas as the gas to be measured flows through the porous protective layer 8 and the pinhole 24 before being introduced to the first chamber 41. The amount of the gas to be measured to be introduced to the first chamber 41 depends on diffusion resistance of the porous protective layer 8 and the pinhole 24.

When the main pump cell control means 91 applies a voltage to the main pump cell 2, oxygen in the first chamber 41 is reduced to oxygen ions O²⁻ on the second pump electrode 23. The oxygen ions O²⁻ permeate through the solid electrolyte 21 to be then discharged to the side of the first pump electrode 22. Operation of the main pump cell 2 is controlled such that a residual oxygen concentration of the gas to be measured is a predetermined target concentration.

The gas to be measured with its oxygen concentration sufficiently reduced in the first chamber 41 flows into the second chamber 42. When the auxiliary pump cell control means 92 applies a predetermined voltage to the auxiliary pump cell 3, oxygen left in the second chamber 42 is reduced to oxygen ions O²⁻ on the second pump electrode 33. The oxygen ions O²⁻ permeate through the solid electrolyte 31 to be then discharged to the side of the first pump electrode 32. At this time, a current that corresponds to the residual oxygen concentration in the second chamber 42 flows through the auxiliary pump cell 3. Consequently, an output of the auxiliary pump cell 3 (hereinafter referred to as an "auxiliary pump output") allows the residual oxygen concentration of the gas to be measured to be detected.

Pumping capacity (oxygen pumping capacity) of the main pump cell 2 depends on a voltage to be applied to the main pump cell 2. The ECU 9 can perform control by the feedback of the auxiliary pump output to the voltage to be applied to the main pump cell 2 such that the residual oxygen concentration detected by the auxiliary pump cell 3 is the target concentration. This enables the oxygen concentration of the gas to be measured flowing into the second chamber 42 to be accurately maintained at the target concentration.

If the residual oxygen concentration detected by the auxiliary pump cell 3 is not reduced to the target concentration through the foregoing control, control is then performed such that the oxygen concentration is reduced to the target concentration by increasing the voltage to be applied to the main pump cell 2 to thereby increase the amount of oxygen discharged by the main pump cell 2. It is noted that, instead of the foregoing control, if the residual oxygen concentration detected by the auxiliary pump cell 3 is not reduced to the target concentration, the ECU 9 may increase the voltage to be applied to the auxiliary pump cell 3 to thereby increase the amount of oxygen discharged by the auxiliary pump cell 3, thereby reducing the oxygen concentration to the target concentration.

When the oxygen is reduced by the main pump cell 2 and the auxiliary pump cell 3 so that the oxygen concentration of the gas to be measured is sufficiently reduced as described above, a reaction of 2NO₂ → 2NO + O₂ takes place to thereby convert NOx into a single gas of NO. When the detection cell control means 93 then applies a predetermined voltage to the detection cell 5, NO in the second chamber 42 is decomposed on the first detection electrode 52, so that oxygen ions O²⁻ are generated. The oxygen ions O²⁻ permeate through the solid electrode 51 before being discharged to the atmospheric duct 61 from the second detection electrode 53. At this time, a current that corresponds to a NO concentration in the second chamber 42 flows in the detection cell 5. An output of the detection cell 5 (hereinafter referred to as a "NOx output") thus allows the NOx concentration of the exhaust gas to be detected.

### (Output characteristic during warming of NOx sensor)

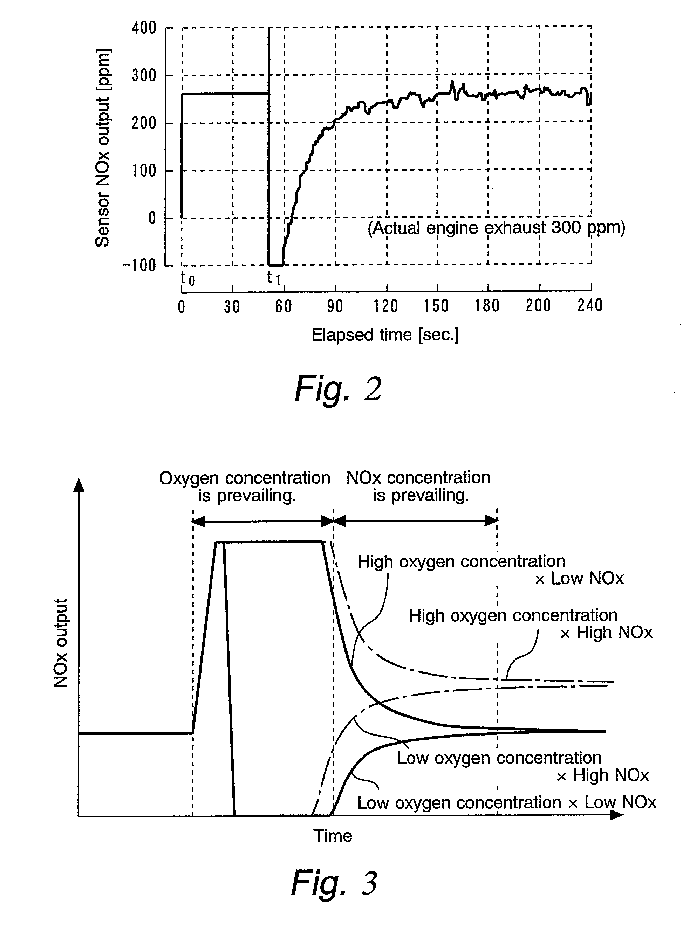

An output characteristic during warming of the NOx sensor 1 will be described below with reference to Fig. 2. To improve emissions, a need exists for using the NOx concentration detected by the NOx sensor 1 for engine control at as early timing as possible. The NOx sensor 1 can, however, detect the above-described NOx concentration only when all cell temperatures reach the activation temperature (full activation). When a cold engine is started, therefore, control is performed to warm the NOx sensor 1 by energizing the heater 7.

Fig. 2 is a graph showing behavior of the NOx output during warming of the NOx sensor 1. It is noted that Fig. 2 shows changes in the NOx output for the gas to be measured that is an actual engine exhaust gas containing 300 ppm of NOx.

In this figure, the warming of the NOx sensor 1 is started at time t0. Then, at time t1, the sensor is activated and detection of the NOx output is started. It is here noted that time t1 is set such that the warming of the detection cell 5 progresses and the NOx output can be detected with oxygen near the first detection electrode 52 (specifically, oxygen in the second chamber 42). Thus, as soon as the detection of the NOx output is started at time t1, the NOx output starts to increase rapidly due to the oxygen near the first detection electrode 52 as shown in the figure.

Additionally, as shown in Fig. 2, the NOx output that rapidly increases at time t1 drops sharply to a negative side immediately thereafter. This may be because of the following reason. Specifically, the oxygen concentration of the engine exhaust gas is considerably low as compared with that of the atmosphere. As the warming of the main pump cell 2 progresses and the pump capacity thereby increases, therefore, the oxygen in the second chamber 42 is removed more than an appropriate amount. As a result, oxygen produced through decomposition of NO is also removed by the main pump cell 2, resulting in the NOx output being stick to a lower limit value on the negative side.

When the warming of the auxiliary pump cell 3 thereafter progresses and the auxiliary pump output is started to be fed back to the voltage to be applied to the main pump cell 2, the pump capacity of the main pump cell 2 is gradually brought to an appropriate value. This causes the NOx output to increase and to converge at a correct value of 300 ppm.

As such, the NOx output exhibits a unique output characteristic during the warming of the NOx sensor 1. This output characteristic heavily depends on the cell capacity of the NOx sensor 1. Thus, in this embodiment, sensor OBD is to be performed using the NOx output characteristic after the start of the warming of the NOx sensor 1. More specifically, abnormality diagnoses of the main pump cell 2, the auxiliary pump cell 3, and the detection cell 5 are to be performed based on, for example, a rising characteristic, a falling characteristic, and a peak value of the NOx output during the warming of the NOx sensor 1. Several abnormality diagnoses using the NOx output characteristics will be described in detail below.

### (Abnormality diagnosis using NOx output rising characteristic)

The abnormality diagnosis using the rising characteristic of the NOx output during the warming will be described below. Fig. 3 is a graph showing an output characteristic when the detection of the NOx output is started during the warming of the NOx sensor 1. The figure shows the output characteristics for NOx concentration states of the gas to be measured (a high NOx state and a low NOx state) and oxygen concentration states of the NOx sensor 1 (a high oxygen concentration state and a low oxygen concentration state). As shown in the figure, the NOx output rapidly increases as soon as the detection of the NOx output is started. As described earlier, this output increase occurs because of the oxygen in the second chamber 42 reacting with the electrode of the detection cell 5 immediately after the application of the voltage to the detection cell 5. Consequently, the speed (gradient) with which the NOx output increases greatly depends on the cell capacity of the detection cell 5.

Capacity of the detection cell 5 varies according to the degree of an abnormality such as deterioration. More specifically, the gradient of the NOx output is small, if the detection cell 5 develops such an abnormality as, for example: an abnormality of being out of a correct range arising from, for example, deterioration with time, element cracking, sulfur poisoning, lead poisoning, or electrode poisoning; clogging due to, for example, deterioration with time or PM; and an abnormality of reduced response arising from, for example, element cracking, sulfur poisoning, lead poisoning, or electrode poisoning. Additionally, if the detection cell 5 develops an open circuit or a short circuit arising from, for example, an open-circuited harness, an abnormal controller, or element cracking, the gradient of the NOx output remains substantially zero and unchanged.

In this embodiment, therefore, if the rising gradient of the NOx output is smaller than a predetermined threshold value, it is to be determined that the above abnormality has occurred in the detection cell 5. A fixed value set in advance as a rising gradient when the detection cell 5 develops an abnormality is used as the predetermined threshold value. It is noted that the rising gradient of the NOx output also varies depending on initial oxygen concentration in the second chamber 42. The threshold value may therefore be variably set according to this oxygen concentration by estimating the oxygen concentration from, for example, an engine operating condition, or detecting the same using, for example, an air-fuel ratio sensor.

By using the rising characteristic immediately following the start of the detection of the NOx output during the warming of the NOx sensor 1 in the foregoing manner, the sensor OBD can be effectively performed at early timing during the warming of the NOx sensor 1.

### (Abnormality diagnosis using NOx output falling characteristic)

The abnormality diagnosis using the falling characteristic of the NOx output during the warming will be described below with reference to Fig. 3. As described earlier, the NOx output rapidly increases when the detection of the NOx output is started. As shown in this figure, the NOx output greatly decreases to the negative side immediately after this increase in the output. This occurs because, as described above, the main pump cell 2 and the auxiliary pump cell 3 remove an excessive amount of oxygen from the second chamber 42. Therefore, the speed (gradient) with which the NOx output decreases depends heavily on the cell capacity of the main pump cell 2 and the auxiliary pump cell 3.

The cell capacity of the main pump cell 2 and the auxiliary pump cell 3 varies according to the degree of an abnormality such as deterioration. More specifically, an absolute value of the gradient of the NOx output is small, if these pump cells 2, 3 develop such an abnormality as, for example: an abnormality of being out of a correct range arising from, for example, deterioration with time, element cracking, sulfur poisoning, lead poisoning, or electrode poisoning; clogging due to, for example, deterioration with time or PM; and an abnormality of reduced response arising from, for example, element cracking, sulfur poisoning, lead poisoning, or electrode poisoning. Additionally, if the pump cells 2, 3 develop an open circuit or a short circuit arising from, for example, an open-circuited harness, an abnormal controller, or element cracking, the gradient of the NOx output remains substantially zero and unchanged.

In this embodiment, therefore, if the falling gradient (absolute value) of the NOx output is smaller than a predetermined threshold value, it is to be determined that the above abnormality has occurred in at least either one of the main pump cell 2 and the auxiliary pump cell 3. A fixed value set in advance as a falling gradient when these cells develop an abnormality is used as the predetermined threshold value. It is noted that the falling gradient of the NOx output also varies depending on the initial oxygen concentration in the second chamber 42. The threshold value may therefore be variably set according to this oxygen concentration by estimating the oxygen concentration from, for example, an engine operating condition, or detecting the same using, for example, an air-fuel ratio sensor.

By using the falling characteristic immediately following the start of the detection of the NOx output during the warming of the NOx sensor 1 in the foregoing manner, the sensor OBD can be effectively performed at early timing during the warming of the NOx sensor 1.

It is noted that the abnormality diagnosis of the auxiliary pump cell output may also be performed based on a comparison between the main pump cell output and the auxiliary pump cell output. More specifically, if output values of the two differ widely from each other, it can then be determined that the feedback control using the auxiliary pump cell 3 is not properly performed, so that an abnormality of the auxiliary pump cell 3 can be determined.

### (Abnormality diagnosis using NOx output peak value)

The abnormality diagnosis using the peak value of the NOx output during the warming will be described below with reference to Fig. 3. As shown in the figure, the NOx output rapidly increases when the detection of the NOx output is started. The peak value of the NOx output after this increase depends on the cell capacity of the detection cell 5.

The cell capacity of the detection cell 5 varies according to the degree of an abnormality such as deterioration. More specifically, the peak value of the NOx output tends to be small, if the detection cell 5 develops such an abnormality as, for example: an abnormality of being out of a correct range arising from, for example, deterioration with time, element cracking, sulfur poisoning, lead poisoning, or electrode poisoning; clogging due to, for example, deterioration with time or PM; and an abnormality of reduced response arising from, for example, element cracking, sulfur poisoning, lead poisoning, or electrode poisoning.

In this embodiment, therefore, if the peak value of the NOx output is smaller than a predetermined threshold value, it is to be determined that the above abnormality has occurred in the detection cell 5. A fixed value set in advance as a peak value when the detection cell 5 develops an abnormality is used as the predetermined threshold value. It is noted that the peak value of the NOx output also varies depending on initial oxygen concentration in the second chamber 42. The threshold value may therefore be variably set according to this oxygen concentration by estimating the oxygen concentration from, for example, an engine operating condition, or detecting the same using, for example, an air-fuel ratio sensor.

By using the peak value of the NOx output immediately following the start of the detection of the NOx output during the warming of the NOx sensor 1 in the foregoing manner, the sensor OBD can be effectively performed at early timing during the warming of the NOx sensor 1.

### (Abnormality diagnosis using NOx output integrated output)

The abnormality diagnosis using the integrated output of the NOx output during the warming will be described below with reference to Fig. 3. As described earlier, if the falling gradient (absolute value) of the NOx output is smaller than a predetermined threshold value, it is to be determined that an abnormality has occurred in at least either one of the main pump cell 2 and the auxiliary pump cell 3.

It is to be here noted that, when the falling gradient of the NOx output is small, the integrated output of the NOx output is large. In this embodiment, therefore, if the integrated output of the NOx output is greater than a predetermined threshold value, it is to be determined that an abnormality has occurred in at least either one of the main pump cell 2 and the auxiliary pump cell 3. The integrated output of the NOx output, however, depends on the initial oxygen concentration in the second chamber 42. Specifically, as shown in Fig. 3, when the oxygen concentration is high, it takes long for the NOx output to start falling. Thus, the predetermined threshold value is to be invariably set according to the oxygen concentration. As described earlier, the oxygen concentration may be estimated from, for example, an engine operating condition, or detected using, for example, an air-fuel ratio sensor.

By using the integrated value of the NOx output immediately following the start of the detection of the NOx output during the warming of the NOx sensor 1 in the foregoing manner, the sensor OBD can be effectively performed at early timing during the warming of the NOx sensor 1.

### [Specific processing performed in the embodiment]

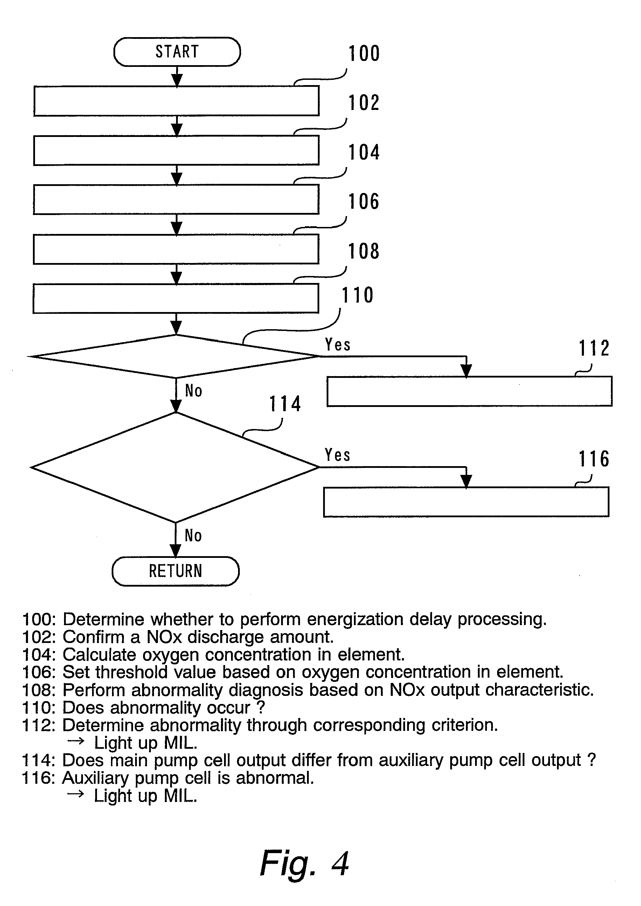

Specific processing performed in this embodiment will be described below with reference to Fig. 4. Fig. 4 is a flowchart showing a routine performed by the ECU 9 in this embodiment. According to the routine shown in Fig. 4, it is first determined whether to perform energization delay processing (step 100). Specifically, a determination as to whether the energization delay processing is to be performed for the NOx sensor 1 is acquired as advance information for performing an abnormality diagnosis for the NOx sensor 1.

Next, a NOx discharge amount is acquired (step 102). Specifically, the NOx concentration in the exhaust gas is estimated based on, for example, the engine operating condition.

In the routine shown in Fig. 4, the oxygen concentration inside the NOx sensor 1 is next acquired (step 104). Specifically, the oxygen concentration in the second chamber 42 is estimated based on, for example, the engine operating condition.

Next, a threshold value as a criterion of an abnormal determination is set (step 106). Specifically, threshold values used for determining various types of abnormalities to be described later are set based on the oxygen concentration acquired in step 104.

Next, an abnormality diagnosis for the NOx sensor 1 is performed (step 108). Specifically, abnormality diagnoses for the main pump cell 2, the auxiliary pump cell 3, and the detection cell 5 are performed based on the NOx output characteristics during the warming of the NOx sensor 1. For the abnormality diagnoses, the abnormality diagnosis using the rising characteristic of the NOx output, the abnormality diagnosis using the falling characteristic of the NOx output, the abnormality diagnosis using the peak value of the NOx output, and the abnormality diagnosis using the integrated output of the NOx output described above are performed. It is next determined, as a result of the above abnormality diagnoses, whether an abnormality occurs in these cells (step 110). If it is determined as a result that an abnormality has occurred in any of these cells, the operation proceeds to the next step and an MIL for warning a driver of occurrence of an abnormality is lit up (step 112).

If it is determined in step 110 that an abnormality has not occurred in the NOx sensor 1, the operation proceeds to the next step and it is determined whether the main pump cell output and the auxiliary pump cell output differ from each other (step 114). Specifically, it is determined whether the difference between the main pump cell output and the auxiliary pump cell output is greater than a predetermined threshold value. If, as a result, the difference is greater than the threshold value, it is determined that the feedback using the auxiliary pump cell 3 has not been properly performed. The operation then proceeds to the next step and the MIL for warning the driver of occurrence of an abnormality in the auxiliary pump cell 3 is lit up (step 116).

As described heretofore, the gas concentration detecting apparatus 10 according to the embodiment can diagnose whether an abnormality occurs in any of the cells of the NOx sensor 1 based on the NOx output characteristics during the warming of the NOx sensor 1. This allows the sensor OBD to be effectively performed at early timing during the warming of the NOx sensor 1.

The NOx sensor 1 in the embodiment described above corresponds to the "gas sensor" in the first aspect of the present invention. Further, the performance of the processing of step 108 by the ECU 9 in the embodiment described above achieves the "abnormality diagnosis means" in the first aspect of the present invention.

### Description of Reference Characters

| | |
|---|---|
| 1 | NOx sensor |
| 2 | main pump cell |
| 21 | solid electrolyte |
| 22 | first pump electrode |
| 23 | second pump electrode |
| 3 | auxiliary pump cell |
| 31 | solid electrolyte |
| 32 | first pump electrode |
| 33 | second pump electrode |
| 4 | spacer |
| 41 | first chamber |
| 42 | second chamber |
| 43 | communication hole |
| 5 | detection cell |
| 51 | solid electrolyte |
| 52 | first detection electrode |
| 53 | second detection electrode |
| 6 | spacer |
| 61 | atmospheric duct |
| 7 | heater |
| 71 | heater electrode |
| 72, 73 | insulation layers |
| 8 | porous protective layer |
| 10 | gas concentration detecting apparatus |

## Claims

1. An abnormality diagnostic apparatus for a gas sensor, the gas sensor including: a main pump cell for pumping oxygen out of a gas to be measured; an auxiliary pump cell for pumping oxygen further out of the gas to be measured; and a detection cell for detecting concentration of a specific gas component contained in the gas to be measured out of which oxygen has been pumped by the main pump cell and the auxiliary pump cell, the abnormality diagnostic apparatus comprising:
abnormality diagnosis means for diagnosing an abnormality in at least one of the detection cell, the main pump cell, and the auxiliary pump cell based on at least one of a rising characteristic of a cell output of the detection cell immediately following a start of detection of the cell output, a peak value thereof, and a subsequent falling characteristic thereof, during warming of the gas sensor.

2. The abnormality diagnostic apparatus for the gas sensor according to claim 1, wherein
if a speed with which the cell output rises is smaller than a predetermined threshold value, the abnormality diagnosis means determines that an abnormality has occurred in the detection cell.

3. The abnormality diagnostic apparatus for the gas sensor according to claim 1 or 2, wherein
if a speed with which the cell output falls after rising is smaller than a predetermined threshold value, the abnormality diagnosis means determines that an abnormality has occurred in at least one of the main pump cell and the auxiliary pump cell.

4. The abnormality diagnostic apparatus for the gas sensor according to any one of claims 1 to 3, wherein
if a peak value after rising of the cell output is smaller than a predetermined threshold value, the abnormality diagnosis means determines that an abnormality has occurred in the detection cell.

5. The abnormality diagnostic apparatus for the gas sensor according to any one of claims 1 to 4, wherein
the abnormality diagnosis means determines whether there is an abnormality of being out of a range of the gas sensor.

6. The abnormality diagnostic apparatus for the gas sensor according to any one of claims 1 to 5, wherein
the abnormality diagnosis means determines whether there is an abnormality of reduced response of the gas sensor.

7. The abnormality diagnostic apparatus for the gas sensor according to any one of claims 1 to 6, wherein
the abnormality diagnosis means determines whether there is an abnormality arising from an open circuit of the gas sensor.

8. The abnormality diagnostic apparatus for the gas sensor according to any one of claims 1 to 7, wherein
the abnormality diagnosis means determines whether there is an abnormality arising from a short circuit of the gas sensor.
